# EUROPEAN PATENT APPLICATION

(11) **EP 4 585 351 A1**
(43) Date of publication of application: **16.07.2025**
(21) Application number: 23915176.4
(22) Date of filing: 24.11.2023
(51) Int. Cl.: B23K 26/00, H01M 50/15, B23K 26/20, H01M 50/103, H01M 50/105, H01M 50/107, H01M 50/152, H01M 50/169, B23K 101/04, B23K 101/36

(54) **BATTERY CELL, BATTERY, ELECTRICAL APPARATUS, AND MANUFACTURING METHOD FOR BATTERY CELL**

(71) Applicant: Contemporary Amperex Technology (Hong Kong) Limited, Central, Central And Western District (HK)
(72) Inventor: CAO, Mengkai, Ningde, Fujian 352100 (CN); HUANG, Shoujun, Ningde, Fujian 352100 (CN); BAI, Lulu, Ningde, Fujian 352100 (CN); ZHENG, Yulian, Ningde, Fujian 352100 (CN); LIN, Denghua, Ningde, Fujian 352100 (CN); WANG, Peng, Ningde, Fujian 352100 (CN)
(74) Representative: Gong, Jinping
(86) International application number: PCT/CN2023/134143
(87) International publication number: WO 2025/107321

(57) **Abstract**

This application provides a battery cell, a battery, an electrical device, and a method for preparing a battery cell. The battery cell includes a shell and an electrode assembly. The shell provides an accommodation space. The shell includes a first plate portion and a second plate portion. The first plate portion is welded to the second plate portion to form a molten pool structure and welding pores located in the molten pool structure. The electrode assembly is accommodated in the accommodation space. A thickness of the first plate portion is greater than a thickness of the second plate portion. At least a part of the welding pores are located in the first plate portion. In some embodiments of this application, the welding process of the first plate portion and the second plate portion is adjusted, so that at least a part of the welding pores can be located in the first plate portion. Because at least a part of the welding pores can be located in the first plate portion, the number of welding pores located in the second plate portion is reduced, thereby reducing the impact caused by the welding pores onto strength of the second plate portion, and improving reliability of the battery cell in use.

## Description

### TECHNICAL FIELD

This application relates to the field of battery technology, and in particular, to a battery cell, a battery, an electrical device, and a method for preparing a battery cell.

### BACKGROUND

Battery cells are widely used in electronic devices such as a mobile phone, a notebook computer, an electric power cart, an electric vehicle, an electric airplane, an electric ship, an electric toy car, an electric toy ship, an electric toy airplane, and a power tool. The battery cells may include a nickel-cadmium battery cell, a nickel-hydrogen battery cell, a lithium-ion battery cell, a secondary alkaline zinc-manganese battery cell, and the like.

However, the shell of a battery cell in use is prone to the risk of breakage as affected by the factors such as internal expansion or external stress, thereby impairing reliability of the battery cell.

### SUMMARY

In view of the foregoing problems, this application provides a battery cell, a battery, an electrical device, and a method for preparing a battery cell to improve reliability of the battery cell.

According to a first aspect, an embodiment of this application provides a battery cell. The battery cell includes a shell and an electrode assembly. The shell provides an accommodation space. The shell includes a first plate portion and a second plate portion. The first plate portion is welded to the second plate portion to form a molten pool structure and welding pores located in the molten pool structure. The electrode assembly is accommodated in the accommodation space. A thickness of the first plate portion is greater than a thickness of the second plate portion. At least a part of the welding pores are located in the first plate portion.

In the above solution, the welding process of the first plate portion and the second plate portion is adjusted, so that at least a part of the welding pores can be located in the first plate portion. Because the first plate portion is larger than the second plate portion in thickness, the thickness of the first plate portion itself can still protect the first plate portion against problems such as cracking or breakage under a specified amount of stress. Further, because at least a part of the welding pores can be located in the first plate portion, the number of welding pores located in the second plate portion is reduced, thereby reducing the impact caused by the welding pores onto the strength of the second plate portion, alleviating the risk of cracking and breakage of the second plate portion, and improving reliability of the battery cell in use.

In some embodiments, the molten pool structure includes a body portion and an end portion connected to the body portion and penetrating deep into the first plate portion. The body portion is exposed on an outer surface of the shell. At least a part of the welding pores are located inside the end portion.

In the above solution, more welding pores are prone to be formed in the end portion than in the body portion during the welding. On this basis, in some embodiments of this application, the end portion can be controlled to be located in the first plate portion by adjusting the positional relationship between the end portion and the shell. In this way, more welding pores can be located in the first plate portion, thereby reducing the risk of cracking of the shell caused by the existence of the welding pores, and improving the reliability of the battery cell in use.

In some embodiments, the second plate portion includes a first surface oriented toward the electrode assembly. In a thickness direction of the first plate portion, a minimum distance between the welding pores located inside the end portion and the first surface is L1, and L1 satisfies: 0.1 mm ≤ L1 ≤ 5 mm.

In the above technical solution, by adjusting the welding manner, the minimum distance L1 between the welding pores inside the end portion and the first surface is caused to be not less than 0.1 mm. This reduces the impact caused by the welding pores inside the end portion onto the strength of the second plate portion, alleviates the risk of cracking and breakage of the second plate portion in the battery cell, and improves structural reliability of the battery cell.

In some embodiments, the end portion and the second plate portion are spaced apart in the thickness direction of the second plate portion.

In the above technical solution, the welding manner is adjusted, so that the end portion and the second plate portion are spaced apart, thereby further reducing the impact caused by the welding pores inside the end portion onto the second plate portion, further alleviating the risk of cracking and breakage of the second plate portion, and improving structural reliability of the battery cell.

In some embodiments, the first plate portion is located on one side of the electrode assembly along a first direction. The end portion is located on one side of the body portion along a second direction. The first direction intersects the second direction.

In the above technical solution, the incident direction of the laser beam is at an inclination to the thickness direction of the first plate portion during welding, so that the end portion can be located on one side of the body portion along the second direction, thereby enabling the end portion to be more departed from the second plate portion, and in turn, reducing the impact caused by the welding pores inside the end portion onto the second plate portion, further alleviating the risk of cracking and breakage of the second plate portion, and improving structural reliability of the battery cell.

In some embodiments, the first plate portion includes a center portion and an edge portion located around the center portion. The edge portion is welded to the second plate portion. In the thickness direction of the second plate portion, the end portion protrudes toward the center portion relative to the body portion, so as to form a molten pool structure.

In the above technical solution, the edge portion is closer to the second plate portion than the center portion. The edge portion needs to be fixed to the second plate portion by welding. In other words, the molten pool structure is typically located inside the edge portion. On this basis, in an embodiment of this application, the end portion protrudes toward the center portion relative to the body portion. In other words, the end portion is farther away from the second plate portion than the body portion. This increases the distance between the end portion and the second plate portion, thereby reducing the impact caused by the welding pores inside the end portion onto the second plate portion, and improving the reliability of the shell structure.

In some embodiments, the shell includes a housing and an end cap. An opening is created at least at one end of the housing in a first direction. The end cap is configured to fit and cover the opening. The end cap includes the first plate portion. The housing includes the second plate portion.

By controlling the welding manner, at least a part of the welding pores can be located in the first plate portion. In other words, at least a part of the welding pores can be located in the end cap rather than in the housing, thereby reducing the impact caused by the welding pores onto the strength of the housing, alleviating the risk of cracking and breakage of the housing, and improving reliability of the battery cell in use.

In some embodiments, a recess is disposed on an inner surface of the housing at a position close to the opening. The end cap is at least partially located in the recess and fixed to a lateral side of the recess by welding. Alternatively, the end cap includes an end cap body and a protruding portion disposed around the end cap body. The end cap body is disposed corresponding to the opening. The protruding portion is located on one side of the housing along the first direction and fixed to the housing by welding.

The above technical solution is applicable to different welding manners such as top welding and side welding, so as to be applicable to different types of shell structures and highly flexible. On this basis, by locally adjusting the welding manner, at least a part of the welding pores can be located inside the first plate portion, thereby improving the reliability of the battery cell.

In some embodiments, the molten pool structure includes a weld mark structure exposed on an outer surface of the shell. The end cap is accommodated in the opening. The weld mark structure is at least partially exposed on an upper surface of the end cap; and/or, a partial structure of the end cap laps the housing in the first direction, and the weld mark structure is at least partially exposed on an outer surface of the housing.

In the above technical solution, the formed weld mark structure varies to some extent depending on the welding manner. On this basis, by adjusting and changing the welding manner, at least a part of the welding pores can be located in the first plate portion, thereby reducing the risk of cracking and breakage of the second plate portion, and achieving high flexibility and reliability.

According to a second aspect, an embodiment of this application provides a battery. The battery includes the battery cell according to any one of the foregoing embodiments. In some embodiments, a structure located inside the housing in the molten pool structure does not go beyond the first plate portion.

According to a third aspect, an embodiment of this application provides an electrical device. The electrical device includes the battery cell according to any one of the foregoing embodiments.

According to a fourth aspect, an embodiment of this application provides a method for preparing a battery cell. The preparation method includes:
providing a first plate portion and a second plate portion, where a thickness of the first plate portion is greater than a thickness of the second plate portion; and
welding the first plate portion to the second plate portion by laser radiation to form a molten pool structure that penetrates deep into the first plate portion, so that at least a part of the welding pores are located in the first plate portion.

In the above technical solution, by adjusting the welding process, the molten pool structure formed by welding can penetrate deep into the first plate portion, so that at least a part of the welding pores can be located inside the second plate portion. Because the first plate portion itself is of a specified thickness, the thickness of the first plate portion itself can still protect the first plate portion against problems such as cracking or breakage under a specified amount of stress even if the welding pores exist in the first plate portion. Further, because at least a part of the welding pores can be located in the first plate portion, the number of welding pores located in the second plate portion is reduced, thereby reducing the impact caused by the welding pores onto the strength of the second plate portion, alleviating the risk of cracking and breakage of the second plate portion, and improving reliability of the battery cell in use.

In some embodiments, an end cap includes the first plate portion. A housing includes the second plate portion. An opening is created at least at one end of the housing in a first direction. The end cap is configured to fit and cover the opening.

In the above technical solution, by adjusting the welding manner, the molten pool structure formed by welding can penetrate deep into the end cap, so that at least a part of the welding pores can be located in the end cap, thereby reducing the number of welding pores in the housing, reducing the impact caused by the welding pores onto the strength of the housing, alleviating the risk of cracking and breakage of the housing, and improving reliability of the battery cell in use.

In some embodiments, in welding the first plate portion to the second plate portion by laser radiation, a laser beam strikes a surface of at least one of the end cap or the housing in the first direction.

An incident angle of the laser beam intersects the first direction; and/or a position at which the laser beam strikes the surface of the end cap is spaced apart from an inner surface of the housing.

In the above technical solution, on the basis of the top welding process, at least one of the position of incidence of the laser beam relative to the housing and the end cap or an incident angle in the top welding is adjusted, so that at least a part of the welding pores are enabled to be located in the end cap, thereby reducing the adverse effects caused by the welding pores onto the housing, and improving the reliability of the battery cell.

In some embodiments, in welding the first plate portion to the second plate portion by laser radiation, a laser beam strikes an outer surface of at least one of the housing or the end cap in a third direction. The third direction intersects the first direction. The third direction is parallel to a thickness direction of the second plate portion.

In the above technical solution, by means of side welding, the end portion in the molten pool structure formed by welding can extend into the end cap, so that the welding pores in the end portion can be located in the end cap, thereby reducing the impact caused by the welding pores onto housing, and improving the structural reliability of the battery cell.

In some embodiments, a thickness of the second plate portion is T, a dimension of the molten pool structure in the first direction is H, and an angle between a laser radiation direction and the first direction is β, and β satisfies: 90° - arcsin (T/H) ≤ β ≤ 90° + arcsin (T/H).

In the above technical solution, regardless of whether the welding manner is top welding, side welding, or the like, in order to enable the end portion in the molten pool structure to penetrate deep into the end cap, the laser radiation direction needs to be limited. By making the laser radiation direction intersect the first direction, and by setting the angle β between the laser radiation direction and the first direction to be not less than 90° - arcsin(T/H), this application reduces the risk of cracking and breakage caused by excessive welding pores in the housing because an excessive part of the molten pool structure is located in the housing. Further, in these embodiments of this application, the angle β is set to be not greater than 90° - arcsin(T/H), so as to reduce the risk of the molten pool structure penetrating deep into a central position on the end cap, reduce the adverse effects caused by the molten pool structure onto the end cap, and improve the reliability of the battery cell.

In some embodiments, β satisfies: 7° ≤ β ≤ 173°.

In the above technical solution, the angle β is set to be not less than 7°, thereby reducing the risk of cracking and breakage caused by excessive welding pores in the housing because an excessive part of the molten pool structure is located in the housing. Further, in these embodiments of this application, the angle β is set to be not greater than 173°, so as to reduce the risk of the molten pool structure penetrating deep into a central position on the end cap, reduce the adverse effects caused by the molten pool structure onto the end cap, and improve the reliability of the battery cell.

The foregoing description is merely an overview of the technical solutions of this application. Some specific embodiments of this application are described below illustratively to enable a clearer understanding of the technical solutions of this application, enable implementation of the technical solutions based on the subject-matter hereof, and make the foregoing and other objectives, features, and advantages of this application more evident and comprehensible.

### BRIEF DESCRIPTION OF DRAWINGS

To describe the technical solutions of the embodiments of this application more clearly, the following outlines the drawings used in the embodiments of this application. Evidently, the drawings outlined below are merely a part of embodiments of this application. A person of ordinary skill in the art may derive other drawings from the outlined drawings without making any creative efforts.
FIG. 1 is a schematic structural diagram of a vehicle according to an embodiment of this application;
FIG. 2 is a schematic exploded view of a structure of a battery according to an embodiment of this application;
FIG. 3 is a schematic exploded view of a structure of a battery module according to an embodiment of this application;
FIG. 4 is a schematic structural diagram of a battery cell according to an embodiment of this application;
FIG. 5 is a partial cross-sectional schematic diagram of a structure of a battery cell according to an embodiment of this application;
FIG. 6 is a partial cross-sectional schematic diagram of a structure of a battery cell according to an embodiment of this application;
FIG. 7 is a partial cross-sectional schematic diagram of a structure of a battery cell according to an embodiment of this application;
FIG. 8 is a partial cross-sectional schematic diagram of a structure of a battery cell according to an embodiment of this application;
FIG. 9 is a partial cross-sectional schematic diagram of a structure of a battery cell according to an embodiment of this application; and
FIG. 10 is a flowchart of a method for preparing a battery cell according to an embodiment of this application.

### List of reference numerals:

1000. vehicle;
100. battery; 200. controller; 300. motor; 400. box; 41. first box portion; 42. second box portion; 43. accommodation portion; 500. battery module; 600. battery cell;
10. shell; 11. end cap; 111. first plate portion; 1111. center portion; 1112. edge portion; 112. end cap body; 113. protruding portion; 12. housing; 121. second plate portion; 1211. first surface;
20. electrode assembly;
30. molten pool structure; 31. body portion; 32. end portion;
K. opening;
A. recess;
J. weld mark structure;
H. welding pore;
X. first direction; Y. second direction; Z. third direction

### DETAILED DESCRIPTION OF EMBODIMENTS

Some embodiments of the technical solutions of this application are described in detail below with reference to the drawings. The following embodiments are merely intended as examples to describe the technical solutions of this application more clearly, but not intended to limit the protection scope of this application.

Unless otherwise defined, all technical and scientific terms used herein bear the same meanings as what is normally understood by a person skilled in the technical field of this application. The terms used herein are merely intended to describe specific embodiments but not to limit this application. The terms "include" and "contain" and any variations thereof used in the specification, claims, and brief description of drawings of this application are intended as non-exclusive inclusion.

In the description of some embodiments of this application, the technical terms "first" and "second" are merely intended to distinguish between different items but not intended to indicate or imply relative importance or implicitly specify the number of the indicated technical features, specific order, or order of precedence. In the description of some embodiments of this application, unless otherwise expressly specified, "a plurality of" means two or more.

Reference to an "embodiment" herein means that a specific feature, structure or characteristic described with reference to this embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that the embodiments described herein may be combined with other embodiments.

In the description of embodiments of this application, the term "and/or" merely indicates a relationship between related items, and represents three possible relationships. For example, "A and/or B" may represent the following three circumstances: A alone, both A and B, and B alone. In addition, the character "/" herein generally indicates an "or" relationship between the item preceding the character and the item following the character.

In the description of embodiments of this application, the term "a plurality of" means two or more (including two). Similarly, "a plurality of groups" means two or more groups (including two groups), and "a plurality of pieces" means two or more pieces (including two pieces).

In the description of embodiments of this application, a direction or a positional relationship indicated by the terms such as "center", "longitudinal", "transverse", "length", "width", "thickness", "up", "down", "before", "after", "left", "right", "vertical", "horizontal", "top", "bottom", "in", "out", "clockwise", "counterclockwise", "axial", "radial", and "circumferential" is a direction or positional relationship based on the illustration in the drawings, and is merely intended for ease or brevity of description of embodiments of this application, but not intended to indicate or imply that the indicated device or component is necessarily located in the specified direction or constructed or operated in the specified direction. Therefore, such terms are not to be understood as a limitation on embodiments of this application.

In the description of this application, unless otherwise expressly specified and defined, the technical terms such as "mount", "concatenate", "connect", and "fix" are generic in a broad sense, for example, mean a fixed connection, a detachable connection, or a one-piece configuration; or mean a mechanical connection or an electrical connection; or mean a direct connection or an indirect connection implemented through an intermediary; or mean internal communication between two components or interaction between two components. A person of ordinary skill in the art can understand the specific meanings of the terms in some embodiments of this application according to specific situations.

In an embodiment of this application, a battery cell may be a secondary battery cell. The secondary battery cell is a battery cell that is reusable through activation of an active material in the battery cell by charging the battery cell that is discharged.

The battery cell may be a lithium-ion battery cell, a sodium-ion battery cell, a sodium-lithium-ion battery cell, a lithium metal battery cell, a sodium metal battery cell, a lithium-sulfur battery cell, a magnesium-ion battery cell, a nickel-hydrogen battery cell, a nickel-cadmium battery cell, a lead storage battery cell, or the like. The type of the battery cell is not limited herein.

Generally, a battery cell includes an electrode assembly. The electrode assembly includes a positive electrode and a negative electrode. During charge and discharge of a battery cell, active ions (such as lithium ions) are shuttled between the positive electrode and the negative electrode by intercalation and deintercalation.

In some embodiments, the electrode assembly further includes a separator. The separator is disposed between the positive electrode and the negative electrode, and serves to prevent a short circuit between the positive electrode and the negative electrode and allow passage of active ions.

In some embodiments, the positive electrode may be a positive electrode plate. The positive electrode plate may include a positive current collector and a positive active material layer disposed on at least one surface of the positive current collector.

As an example, the positive current collector includes two surfaces opposite to each other in a thickness direction of the current collector. The positive active material layer is disposed on one or both of the two opposite surfaces of the positive current collector.

As an example, the positive current collector may be metal foil or a composite current collector. For example, the metal foil may be made of stainless steel, copper, aluminum, aluminum with a silver finish, stainless steel with a silver finish, carbon electrode, carbon, nickel, titanium, or the like. The composite current collector may include a polymer material substrate and a metal layer. The composite current collector may be formed by overlaying the polymer material substrate with a metal material (for example, aluminum, aluminum alloy, nickel, nickel alloy, titanium, titanium alloy, silver, and silver alloy). The polymer material substrate may be, for example, polypropylene, polyethylene terephthalate, polybutylene terephthalate, polystyrene, or polyethylene.

As an example, the positive active material layer includes a positive active material. The positive active material may include at least one of the following materials: lithium-containing phosphate, lithium transition metal oxide, and a modified compound thereof. However, this application is not limited to such materials, and other conventional materials usable as a positive active material of a battery may be used instead. Of such positive active materials, one may be used alone, or at least two may be used in combination. Examples of the lithium-containing phosphate may include, but without being limited to, at least one of lithium iron phosphate (such as LiFePO₄ (briefly referred to as LFP)), a composite of lithium iron phosphate and carbon, lithium manganese phosphate (such as LiMnPO₄), a composite of lithium manganese phosphate and carbon, lithium manganese iron phosphate, or a composite of lithium manganese iron phosphate and carbon. Examples of the lithium transition metal oxide may include, but without being limited to, at least one of lithium cobalt oxide (such as LiCoO₂), lithium nickel oxide (such as LiNiO₂), lithium manganese oxide (such as LiMnO₂ and LiMn₂O₄), lithium nickel cobalt oxide, lithium manganese cobalt oxide, lithium nickel manganese oxide, lithium nickel cobalt manganese oxide (such as LiNi_{1/3}Co_{1/3}Mn_{1/3}O₂ (briefly referred to as NCM333), LiNi_{0.5}Co_{0.2}Mn_{0.3}O₂ (briefly referred to as NCM523), LiNi_{0.5}Co_{0.25}Mn_{0.25}O₂ (briefly referred to as NCM211), LiNi_{0.6}Co_{0.2}Mn_{0.2}O₂ (briefly referred to as NCM622), LiNi_{0.8}Co_{0.1}Mn_{0.1}O₂ (briefly referred to as NCM811), lithium nickel cobalt aluminum oxide (such as LiNi_{0.805}Co_{0.15}Al_{0.05}O₂), or a modified compound thereof.

In some embodiments, the positive electrode may be foamed carbon or a foamed metal. The foamed metal may be foamed nickel, foamed copper, foamed aluminum, foamed alloy, or the like. When the foamed metal is used as the positive electrode, a positive active material may be disposed on the surface of the foamed metal or not. As an example, a lithium source material, a potassium metal, or a sodium metal may further fill and/or deposit within the foamed metal. The lithium source material is a lithium metal and/or a lithium-rich material.

In some embodiments, the negative electrode may be a negative electrode plate. The negative electrode plate may include a negative current collector and a negative active material layer disposed on at least one surface of the negative current collector.

As an example, the negative current collector may be metal foil, foamed metal, foamed carbon, or a composite current collector. For example, the metal foil may be made of stainless steel, copper, aluminum, aluminum with a silver finish, stainless steel with a silver finish, carbon electrode, carbon, nickel, titanium, or the like. The foamed metal may be foamed nickel, foamed copper, foamed aluminum, foamed alloy, or the like. The composite current collector may include a polymer material substrate and a metal layer. The composite current collector may be formed by overlaying the polymer material substrate with a metal material (for example, copper, copper alloy, nickel, nickel alloy, titanium, titanium alloy, silver, and silver alloy). The polymer material substrate may be, for example, polypropylene, polyethylene terephthalate, polybutylene terephthalate, polystyrene, or polyethylene.

As an example, the negative active material may be a negative active material known for use in a battery cell in the art. As an example, the negative active material may include at least one of the following materials: artificial graphite, natural graphite, soft carbon, hard carbon, silicon-based material, tin-based material, lithium titanium oxide, and the like. The silicon-based material may be at least one selected from elemental silicon, a silicon-oxygen compound, a silicon-carbon composite, a silicon-nitrogen composite, and a silicon alloy. The tin-based material may be at least one selected from elemental tin, a tinoxygen compound, or a tin alloy. However, this application is not limited to such materials, and other conventional materials usable as a negative active material of a battery may be used instead. One of the negative active materials may be used alone, or at least two thereof may be used in combination.

In some embodiments, the negative electrode may be foamed carbon or a foamed metal. The foamed metal may be foamed nickel, foamed copper, foamed aluminum, foamed alloy, or the like. When the foamed metal is used as the negative electrode plate, a negative active material may be disposed on the surface of the foamed metal or not.

As an example, a lithium source material, a potassium metal, or a sodium metal may further fill and/or deposit within the negative current collector. The lithium source material is a lithium metal and/or a lithium-rich material.

In some embodiments, the material of the positive current collector may be aluminum, and the material of the negative current collector may be copper.

In some embodiments, the electrode assembly further includes a separator. The separator is disposed between the positive electrode plate and the negative electrode plate.

In some embodiments, the separator is a separator film. The type of the separator is not particularly limited in this application, and may be any well-known porous separator that is highly stable both chemically and mechanically.

As an example, the separator may be mainly made of a material that is at least one selected from glass fiber, non-woven fabric, polyethylene, polypropylene, polyvinylidene difluoride, or ceramics. The separator may be a single-layer film or a multilayer composite film, without being particularly limited. When the separator is a multilayer composite film, materials in different layers may be identical or different, without being particularly limited. The separator may be a separate component located between the positive electrode and the negative electrode, or may be attached to a surface of the positive or negative electrode.

In some embodiments, the separator is a solid-state electrolyte. The solid-state electrolyte is disposed between the positive electrode plate and the negative electrode plate, and serves functions of transmitting ions and isolating the positive electrode from the negative electrode simultaneously.

In some embodiments, the battery cell further includes an electrolyte. The electrolyte serves to conduct ions between the positive electrode and the negative electrode. The type of the electrolyte is not particularly limited in this application, and may be selected as required. The electrolyte may be in a liquid state, gel state, or solid state.

In some embodiments, the liquid-state electrolyte includes an electrolyte salt and a solvent.

In some embodiments, the electrolyte salt may be at least one selected from lithium hexafluorophosphate, lithium tetrafluoroborate, lithium perchlorate, lithium hexafluoroarsenate, lithium bisfluorosulfonimide, lithium bistrifluoromethanesulfonimide, lithium trifluoromethanesulfonate, lithium difluorophosphate, lithium difluoro(oxalato)borate, lithium bis(oxalato)borate, lithium difluoro(bisoxalato)phosphate, and lithium tetrafluoro(oxalato)phosphate.

In some embodiments, the solvent may be at least one selected from ethylene carbonate, propylene carbonate, ethyl methyl carbonate, diethyl carbonate, dimethyl carbonate, dipropyl carbonate, methyl propyl carbonate, ethylene propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methyl sulfone, and (ethylsulfonyl)ethane. The solvent is optionally an ether solvent. The ether solvent may include one or more of ethylene glycol dimethyl ether, ethylene glycol diethyl ether, diglyme, triglyme, tetraglyme, 1,3-dioxolane, tetrahydrofuran, methyltetrahydrofuran, diphenyl ether, or crown ether.

The gel electrolyte includes a framework using a polymer as an electrolyte, paired with ionic liquid-lithium salt.

The solid-state electrolytes include a polymer solid-state electrolyte, an inorganic solid-state electrolyte, and a composite solid-state electrolyte.

As an example, the polymer solid-state electrolyte may be polyether (polyethylene oxide), polysiloxane, polycarbonate, polyacrylonitrile, polyvinylidene difluoride, polymethyl methacrylate, singleion polymer, polyionic liquid-lithium salt, cellulose, or the like.

As an example, the inorganic solid-state electrolyte may be one or more of an oxide solid electrolyte (crystalline perovskite, sodium superionic conductor, garnet, amorphous LiPON film), a sulfide solid electrolyte (a crystalline lithium superionic conductor (lithium germanium phosphorus sulfide, silver germanium sulfide) or an amorphous sulfide), a halide solid electrolyte, a nitride solid electrolyte, or a hydride solid electrolyte.

As an example, the composite solid-state electrolyte is formed by adding an inorganic solid-state electrolyte filler into a polymer solid electrolyte.

In some embodiments, the electrode assembly assumes a jelly-roll structure. The positive electrode plate and the negative electrode plate are wound into a jelly-roll structure.

In some embodiments, the electrode assembly is a stacked structure.

As an example, a plurality of positive electrode plates and a plurality of negative electrode plates are disposed. The plurality of positive electrode plates and the plurality of negative electrode plates are stacked alternately.

As an example, a plurality of positive electrode plates may be disposed, and the negative electrode plate is folded to form a plurality of stacked fold sections. One positive electrode plate is sandwiched between adjacent fold sections.

As an example, both the positive electrode plate and the negative electrode plate are folded to form a plurality of stacked fold sections.

As an example, a plurality of separators may be disposed, and each of the separators may be disposed between any positive electrode plate and negative electrode plate that are adjacent to each other.

As an example, the separators may be disposed continuously, and each separator may be disposed in a folded or wound manner between any positive electrode plate and negative electrode plate that are adjacent to each other.

In some embodiments, the shape of the electrode assembly may be a cylindrical shape, a flat shape, a polygonal prism shape, or the like.

In some embodiments, a tab is disposed on the electrode assembly. The tab can lead a current from the electrode assembly. The tab includes a positive tab and a negative tab.

In some embodiments, the battery cell may include a shell. The shell is configured to package components such as the electrode assembly and the electrolyte. The shell may be a steel shell, an aluminum shell, a plastic shell (for example, polypropylene), a composite metal shell (for example, a copperaluminum composite shell), or an aluminum laminated film.

As an example, the battery cell may be a cylindrical battery cell, a prismatic battery cell, a pouch-type battery cell, or a battery cell of another shape. The prismatic battery cells include a square-shell battery cell, a blade battery cell, and a polygonal prism battery. An example of the polygonal prism battery is hexagonal prism battery.

The battery mentioned in embodiments of this application means a unitary physical module that includes one or more battery cells to provide a higher voltage and a higher capacity.

In some embodiments, the battery may be a battery module. When there are a plurality of battery cells, the plurality of battery cells are arranged and fixed to form a battery module.

In some embodiments, the battery may be a battery pack. The battery pack includes a box and a battery cell. The battery cell or battery module is accommodated in the box.

In some embodiments, the box may serve as a part of a chassis structure of a vehicle. For example, a part of the box may become at least a part of a floor panel of the vehicle, or, a part of the box may become at least a part of a crossbeam and a vertical beam of the vehicle.

In some embodiments, the battery may be an energy storage device. Energy storage devices include an energy storage container, an energy storage cabinet, and the like.

In a process of preparing a battery cell, different plate structures on the battery cell usually need to be connected and fixed by welding to form a shell. In the welding process, welding pores are usually formed at the welding position. Consequently, the strength of the plate structure is reduced at a position corresponding to the welding pores. Therefore, during the use of the battery cell, as affected by factors such as internal expansion and external stress, the housing is prone to the risk of cracking and damage, thereby being detrimental to structural reliability of the battery cell.

In view of the above problems, this application provides a battery cell, a battery, an electrical device, and a method for preparing a battery cell. By changing the welding manner, this application reduces the risk of cracking of the battery cell, and improves the service life and reliability of the battery cell.

The technical solution described in this embodiment of this application is applicable to various devices that use a battery. The electrical device may be, for example, a mobile phone, a portable device, a notebook computer, an electric power cart, an electric vehicle, a ship, a spacecraft, an electric toy, an electric tool. The spacecraft may be, for example, an airplane, a rocket, a space shuttle, a spaceship, and the like. The electric toy may be, for example, a fixed or mobile electric toy, specifically such as a game console, an electric car toy, an electric ship toy, an electric airplane toy, and the like. The electric tool may be, for example, an electric tool for metal cutting, an electric grinding tool, an electric assembly tool, an electric tool for railways, specifically such as an electric drill, an electric grinder, an electric wrench, an electric screwdriver, an electric hammer, an electric impact drill, a concrete vibrator, and an electric planer.

The battery cell described in this embodiment of this application is not only applicable to the electrical devices described above. However, for brevity, the following embodiment is described by using an electric vehicle as an example.

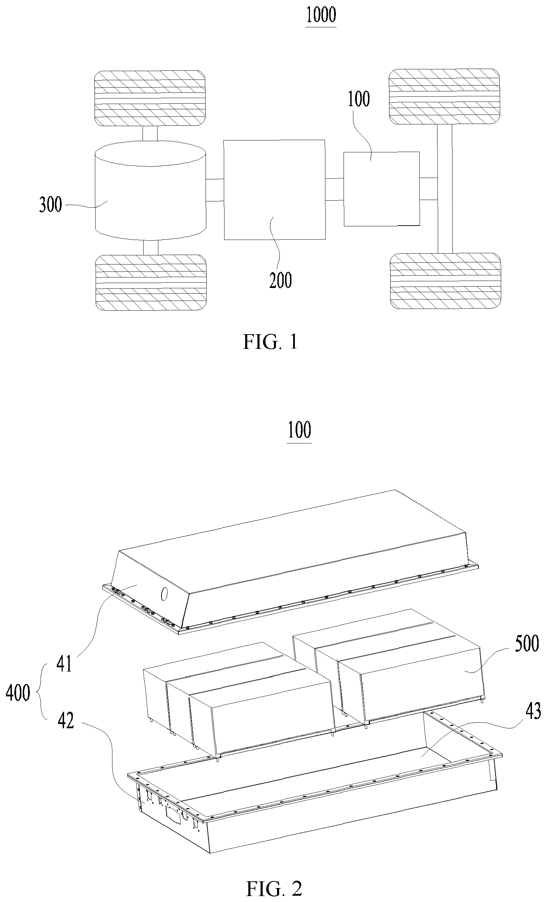

Referring to FIG. 1, FIG. 1 is a brief schematic diagram of a vehicle 1000 according to an embodiment of this application. The vehicle 1000 may be an oil-fueled vehicle, a natural gas vehicle, or a new energy vehicle. The new energy vehicle may be a battery electric vehicle, a hybrid electric vehicle, a range-extended electric vehicle, or the like. The battery 100 may be disposed inside the vehicle 1000. Specifically, for example, the battery 100 may be disposed at the bottom, front, or rear of the vehicle 1000. The battery 100 may be configured to supply power to the vehicle 1000. For example, the battery 100 may serve as an operating power supply of the vehicle 1000. The vehicle 1000 may further include a controller 200 and a motor 300. The controller 200 is configured to, for example, control the battery to supply power to the motor 300. The battery may be configured to start or navigate the vehicle 1000 or the like. Definitely, the battery 100 may also be used as a drive power supply of the vehicle 1000, and provide driving power for the vehicle 1000 in place of or partially in place of oil or natural gas.

FIG. 2 is a schematic exploded view of a battery according to some embodiments of this application. As shown in FIG. 2, the battery 100 includes a box 400 and a battery cell (not shown in the drawing). The battery cell is accommodated in the box 400.

The box 400 is configured to accommodate the battery cell. The box 400 may be one of various structures. In some embodiments, the box 400 may include a first box portion 41 and a second box portion 42. The first box portion 41 and the second box portion 42 fit each other. The first box portion 41 and the second box portion 42 together define an accommodation portion 43 configured to accommodate the battery cell. The second box portion 42 may be a hollow structure opened at one end. The first box portion 41 is a plate structure. The first box portion 41 fits and covers the opening of the second box portion 42 to form the box that includes the accommodation portion 43. Alternatively, the first box portion 41 and the second box portion 42 each may be a hollow structure opened at one end. The opening of the first box portion 41 fits the opening of the second box portion 42 to form the box 400 that includes the accommodation portion 43. Definitely, the first box portion 41 and the second box portion 42 may be in various shapes, such as a cylinder or a cuboid.

There may be one or more battery cells in the battery 100. If there are a plurality of battery cells, the plurality of battery cells may be connected in series, parallel, or series-and-parallel pattern. The series-and-parallel pattern means a combination of series connection and parallel connection of the plurality of battery cells. The plurality of battery cells may be directly connected in series, parallel, or series-and-parallel pattern, and then the whole of the plurality of battery cells may be accommodated in the box 400. Alternatively, the plurality of battery cells may be connected in series, parallel, or series-and-parallel pattern to form a battery module 500, and then a plurality of battery modules 500 are connected in series, parallel, or series-and-parallel pattern to form a whole for being accommodated in the box 400.

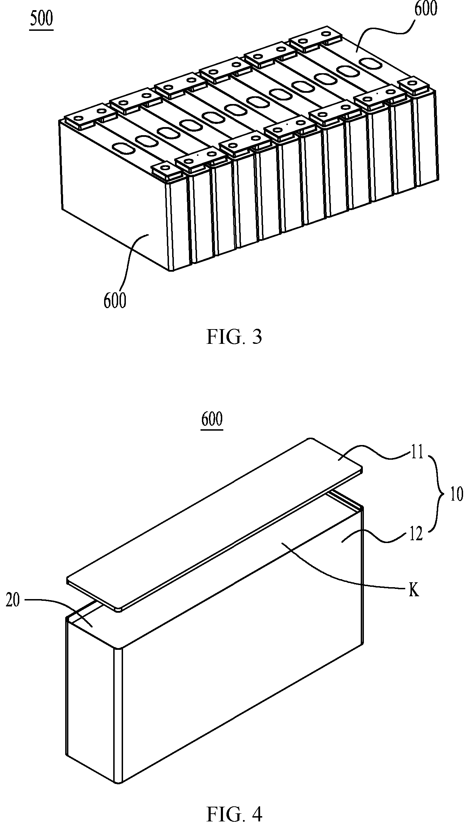

FIG. 3 is a schematic structural diagram of a battery module 500 shown in FIG. 2.

In some embodiments, as shown in FIG. 3, there are a plurality of battery cells 600. The plurality of battery cells 600 are connected in series, parallel, or series-and-parallel pattern to form a battery module 500 first. A plurality of battery modules 500 are then connected in series, parallel, or series-and-parallel pattern to form a whole for being accommodated in the box.

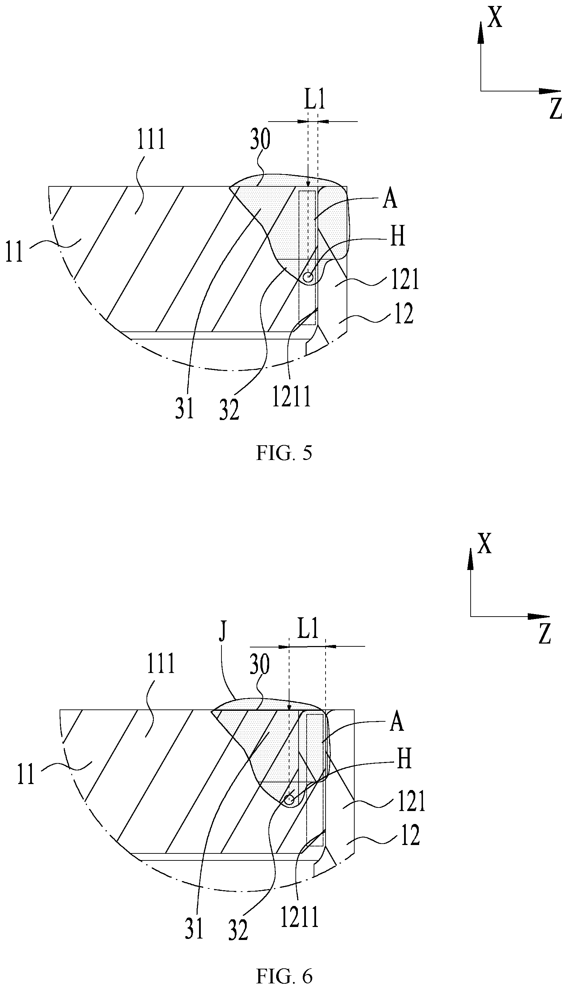

Next, the structure of the battery cell 600 is described with reference to drawings. Referring to FIG. 4 and FIG. 5, the battery cell 600 includes a shell 10 and an electrode assembly 20. The shell 10 provides an accommodation space. The shell 10 includes a first plate portion 111 and a second plate portion 121. The first plate portion 111 is welded to the second plate portion 121 to form a molten pool structure 30 and welding pores H located in the molten pool structure 30. The electrode assembly 20 is accommodated in the accommodation space. A thickness of the first plate portion 111 is greater than a thickness of the second plate portion 121. At least a part of the welding pores H are located in the first plate portion 111.

The electrode assembly 20 is a main component configured to provide electrical energy in the battery cell 600. The shell 10 provides an accommodation space capable of accommodating the electrode assembly 20. The shape of the shell 10 may be determined depending on the shape of the electrode assembly 20. For example, if the electrode assembly 20 is a cylindrical structure, the shell 10 may be a cylindrical structure. If the electrode assembly 20 is a cuboidal structure, the shell 10 may assume a cuboidal structure in appearance.

The shell 10 includes a first plate portion 111 and a second plate portion 121. The first plate portion 111 and the second plate portion 121 may be prepared and formed separately. The thickness of the first plate portion 111 is greater than the thickness of the second plate portion 121. Generally, the greater the thickness of the component, the greater the corresponding structural strength, and the lower the risk of damage to the component caused by an external force. Depending on the arrangement of the first plate portion 111 and the second plate portion 112, the thickness direction of the first plate portion 111 may be identical to the thickness direction of the second plate portion 112, or, the thickness direction of the first plate portion 111 may intersect the thickness direction of the second plate portion 112.

Further, the first plate portion 111 and the second plate portion 121 usually need to be fixed by welding to form a molten pool structure 30. The molten pool structure 30 includes a partial structure of the first plate portion 111 and a partial structure of the second plate portion 121. In a process of welding the first plate portion 111 and the second plate portion 121, as affected by high temperature factors, the solubility of hydrogen in the molten droplets and molten metal is very high. However, during cooling, the solubility of hydrogen decreases with the decrease of temperature. A part of hydrogen gas can hardly escape to the external environment in time, thereby forming welding pores H in the molten pool structure 30.

On this basis, in an embodiment of this application, the welding process of the first plate portion 111 and the second plate portion 121 is adjusted, so that at least a part of the welding pores H can be located in the first plate portion 111. Because the first plate portion 111 is larger than the second plate portion 121 in thickness, the thickness of the first plate portion 111 itself can still protect the first plate portion against problems such as cracking or breakage under a specified amount of stress. Further, because at least a part of the welding pores H can be located in the first plate portion 111, the number of welding pores H located in the second plate portion 121 is reduced, thereby reducing the impact caused by the welding pores H onto the strength of the second plate portion 121, alleviating the risk of cracking and breakage of the second plate portion 121, and improving reliability of the battery cell 600 in use.

In some embodiments, the molten pool structure 30 includes a body portion 31 and an end portion 32 connected to the body portion 31 and penetrating deep into the first plate portion 111. The body portion 31 is exposed on an outer surface of the shell 10. At least a part of the welding pores H are located inside the end portion 32.

In a process of welding the first plate portion 111 to the second plate portion 121, depending on the welding manner, the formed molten pool structure 30 varies. The molten pool structure 30 includes a body portion 31 and an end portion 32. Referring to the drawings, compared to the end portion 32, the body portion 31 is usually closer to the outer surface of the shell 10, and the body portion 31 is exposed on the outer surface of the shell 10. A cross-sectional width of the body portion 31 is usually larger than a cross-sectional width of the end portion 32.

Depending on the welding manner, the body portion 31 and the end portion 32 in the molten pool structure 30 may assume various structures. The relative positional relationship between the body portion 31 and the end portion 32 may be diversified. As an example, the first plate portion 111 is located on one side of the electrode assembly 20 along the first direction X, and the end portion 32 may be located on one side of the body portion 31 along the first direction X, or the end portion 32 is located on one side of the body portion 31 along another direction intersecting the first direction X.

More welding pores H are prone to be formed in the end portion 32 than in the body portion 31 during the welding. On this basis, in some embodiments of this application, the end portion 32 can be controlled to be located in the first plate portion 111 by adjusting the positional relationship between the end portion 32 and the shell 10. In this way, more welding pores H can be located in the first plate portion 111, thereby reducing the risk of cracking of the shell 10 caused by the existence of the welding pores H, and improving the reliability of the battery cell 600 in use.

In some embodiments, the second plate portion 121 includes a first surface 1211 oriented toward the electrode assembly 20. In a thickness direction of the first plate portion 111, a minimum distance between the welding pores H located inside the end portion 32 and the first surface 1211 is L1, and L1 satisfies: 0.1 mm ≤ L1 ≤ 5 mm. Optionally, L1 is one of 0.1 mm, 0.5 mm, 1 mm, 2 mm, or 5 mm.

Due to the existence of the molten pool structure 30, the strength of other structures near the molten pool structure 30 on the shell 10 is relatively low. On this basis, the strength of other structures located around the end portion 32 on the shell 10 is further decreased due to the existence of the welding pores H. In this case, if the end portion 32 is too close to the second plate portion 121, the second plate portion 121 is prone to cracking and breakage under stress because the thickness of the second plate portion is relatively low, thereby impairing the reliability of the battery cell 600.

In view of this, in these embodiments of this application, the minimum distance L1 between the welding pores H in the end portion 32 and the first surface 1211 is limited so that L1 is not less than 0.1 mm. The first surface 1211 is a surface of the second plate portion 121, the surface being oriented toward the electrode assembly 20. In other words, the first surface 1211 is configured to form the inner surface of the shell 10. The minimum distance L1 between the welding pores H in the end portion 32 and the first surface 1211 may be a minimum distance between the center of at least one welding pore H in the end portion 32 and the first surface 1211.

In these embodiments of this application, by adjusting the welding manner, the minimum distance L1 between the welding pores H in the end portion 32 and the first surface 1211 is caused to be not less than 0.1 mm. This reduces the impact caused by the welding pores H inside the end portion 32 onto the thickness of the second plate portion 121, alleviates the risk of cracking and breakage of the second plate portion 121 in the battery cell 600, and improves structural reliability of the battery cell 600.

Further, in these embodiments of this application, L1 is set to be not greater than 5 mm, thereby preventing the end portion 32 from excessively deviating from the second plate portion 121 and from exerting excessive adverse effects on the center of the first plate portion 111, improving the structural reliability of the first plate portion 111, and increasing the service life of the battery cell 600.

It is hereby noted that in these embodiments of this application, although the minimum distance L1 between the welding pores H in the end portion 32 and the first surface 1211 is not less than 0.1 mm, the end portion 32 in the molten pool structure 30 may be partially located in the second plate portion 121, or the end portion 32 may closely fit the second plate portion 121, as long as the minimum distance between the center of at least one welding pore H in the end portion 32 and the first surface 1211 is not less than 0.1 mm.

In some embodiments, referring to FIG. 6 to FIG. 9, the end portion 32 and the second plate portion 121 are spaced apart in the thickness direction of the second plate portion 121.

In these embodiments of this application, the welding manner is adjusted, so that the end portion 32 and the second plate portion 121 are spaced apart, thereby further reducing the impact caused by the welding pores H inside the end portion 32 onto the second plate portion 121, further alleviating the risk of cracking and breakage of the second plate portion 121, and improving structural reliability of the battery cell 600.

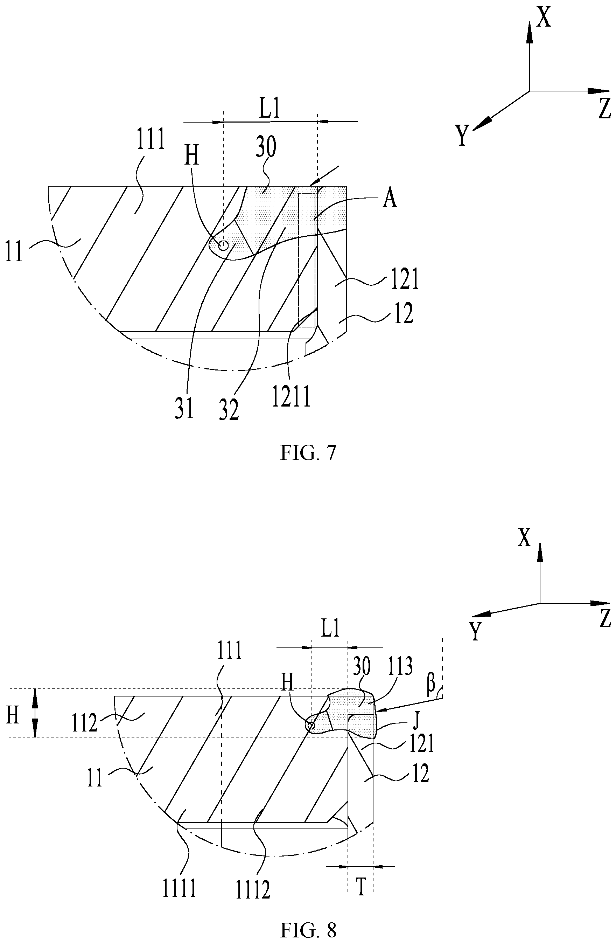

In some embodiments, as shown in FIG. 7 to FIG. 9, the first plate portion 111 is located on one side of the electrode assembly 20 along a first direction X. The end portion 32 is located on one side of the body portion 31 along a second direction Y. The first direction X intersects the second direction Y.

The first plate portion 111 and the electrode assembly 20 are disposed opposite to each other in the first direction X. The first direction X may be the thickness direction of the first plate portion 111. The end portion 32 is located on one side of the body portion 31 along the second direction Y. The angle between the first direction X and the second direction Y may be diversified. For example, as shown in FIG. 7, the first direction X may be perpendicular to the second direction Y, or, as shown in FIG. 6, the first direction X intersects but is not perpendicular to the second direction Y.

The positional relationship between the end portion 32 and the body portion 31 typically depends on the specific welding manner. Specifically, if a laser beam strikes one of the first plate portion 111 or the second plate portion 121 along the first direction X, then the body portion 31 and end portion 32 formed correspondingly are usually disposed in parallel in the first direction X. If the laser beam strikes one of the first plate portion 111 or the second plate portion 121 along another direction intersecting the first direction X, then the body portion 31 and end portion 32 formed correspondingly are usually disposed in parallel in the other direction intersecting the first direction X.

To sum up, in some embodiments of this application, the incident direction of the laser beam is at an inclination to the thickness direction of the first plate portion 111 during welding, so that the end portion 32 can be located on one side of the body portion 31 along the second direction Y, thereby enabling the end portion 32 to be more departed from the second plate portion 121, and in turn, reducing the impact caused by the welding pores H inside the end portion 32 onto the second plate portion 121, further alleviating the risk of cracking and breakage of the second plate portion 121, and improving structural reliability of the battery cell 600.

It is hereby noted that, depending on the actual situation, the second direction Y may be parallel to the thickness direction of the second plate portion 121, or the second direction Y may intersect the thickness direction of the second plate portion 121.

In some embodiments, the first plate portion 111 includes a center portion 1111 and an edge portion 1112 located around the center portion 1111. The edge portion 1112 is welded to the second plate portion 121 to form a molten pool structure 30. In the thickness direction of the second plate portion 121, the end portion 32 protrudes toward the center portion 1111 relative to the body portion 31.

The center portion 1111 is located at the center of the first plate portion 111. The edge portion 1112 is located at an edge position of the first plate portion 111. The edge portion 1112 is disposed around the center portion 1111. The center portion 1111 and the edge portion 1112 may assume diversified shapes. For example, the projection of the center portion 1111 in the first direction X may assume a circular structure, and the projection of the edge portion 1112 in the first direction X may assume a circular ring structure. Alternatively, the projection of the center portion 1111 in the first direction X may assume a square structure, and the projection of the edge portion 1112 in the first direction X may assume a square ring structure.

The edge portion 1112 is closer to the second plate portion 121 than the center portion 1111. The edge portion 1112 needs to be fixed to the second plate portion 121 by welding. In other words, the molten pool structure 30 is typically located inside the edge portion 1112. On this basis, in these embodiments of this application, the end portion 32 protrudes toward the center portion 1111 relative to the body portion 31. In other words, the end portion 32 is farther away from the second plate portion 121 than the body portion 31. This increases the distance between the end portion 32 and the second plate portion 121, thereby reducing the impact caused by the welding pores H inside the end portion 32 onto the second plate portion 121, and improving the reliability of the shell 10 structure.

In some embodiments, the shell 10 includes a housing 12 and an end cap 11. An opening K is created at least at one end of the housing 12 in a first direction X. The end cap 11 is configured to fit and cover the opening K. The end cap 11 includes the first plate portion 111. The housing 12 includes the second plate portion 121.

The housing 12 and the end cap 11 are fixed together by welding to jointly form the shell 10. The housing 12 assumes a hollow structure that includes an opening K. The end cap 11 is configured to fit and cover the opening K. In other words, along the first direction X, the projection of the end cap 11 at least partially falls inside the projection of the opening K, where the first direction X may be the thickness direction of the end cap 11.

The end cap 11 includes a first plate portion 111. The housing 12 includes a second plate portion 121. The end cap and the housing are fixed together by welding to form a molten pool structure 30 and welding pores H located in the molten pool structure 30. Generally, due to the factors such as thickness, the thickness of the end cap 11 is usually greater than the thickness of the housing 12. On this basis, in these embodiments of this application, by controlling the welding manner, at least a part of the welding pores H can be located in the first plate portion 111. In other words, at least a part of the welding pores H can be located in the end cap 11 rather than in the housing 12, thereby reducing the impact caused by the welding pores H onto the strength of the housing 12, alleviating the risk of cracking and breakage of the housing 12, and improving reliability of the battery cell 600 in use.

It is hereby noted that the housing 12 may include a plurality of side plates connected in tandem. The plurality of side plates come together on all sides to form the opening K. On this basis, the second plate portion 121 may be one of the side plates of the housing 12 that need to be fixed to the end cap 12 by welding. Further, the thickness direction of the second plate portion 121 corresponds to the thickness direction of the side plate.

In some embodiments, as shown in FIG. 4 to FIG. 6, a recess A is disposed on an inner surface of the housing 12 at a position close to the opening K. The end cap 11 is at least partially located in the recess A and fixed to a lateral side of the recess A by welding.

The recess A may also be disposed inside the housing 12, and the recess A may be configured to carry the end cap 11. Optionally, the dimension of the recess A in the first direction X is not less than the dimension of the end cap 11 in the first direction X, so that the end cap 11 can be completely socketed in the housing 12.

The end cap 11 is fixed to the lateral side of the recess A by welding. The lateral side of the recess A means an inner surface of the recess A, the inner surface being perpendicular to the first direction X and close to the accommodation space. Further, in order to fix the end cap 11 to the lateral side of the recess A by welding, the welding needs to be top welding. Specifically, a laser beam needs to be cast from a side of the end cap 11, the side being back from the electrode assembly 20. In addition, the laser beam needs to strike a surface of at least one of the end cap 11 or the housing 12 in the first direction X, and then, under the action of the laser, a partial structure of the end cap 11 and at least a partial structure at the recess A are fused and welded into one piece.

On this basis, in order to reduce the impact caused by the welding pores H onto the second plate portion 121, the incident angle of the laser beam that falls upon the shell 10 may be tuned, or the position at which the laser beam is incident on the shell 10 may be tuned, so that at least a part of the welding pores H are located in the first plate portion 111, thereby reducing the risk of cracking and breakage of the second plate portion 121 and improving the reliability of the shell 10 in use.

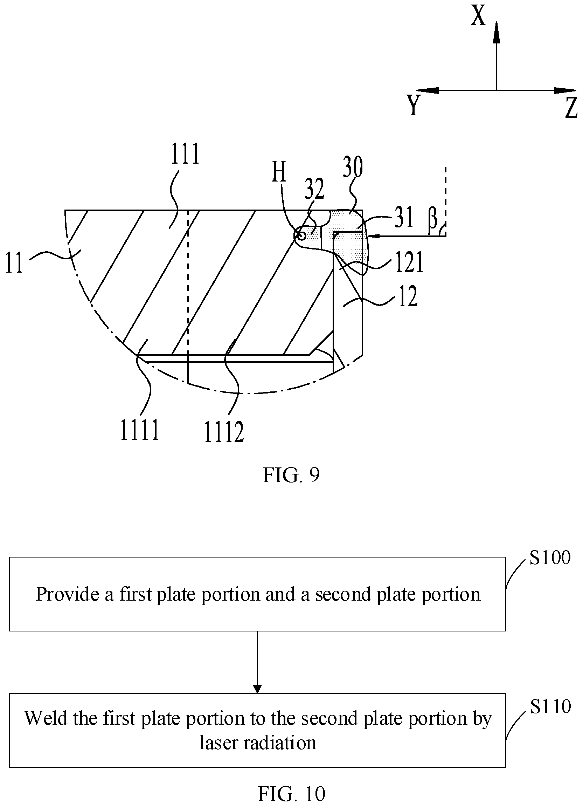

Alternatively, in some other embodiments, as shown in FIG. 8 and FIG. 9, the end cap 11 includes an end cap 11 body and a protruding portion 113 disposed around the end cap 11 body. The end cap 11 body is disposed corresponding to the opening K. The protruding portion 113 is located on one side of the housing 12 along the first direction X and fixed to the housing 12 by welding.

The end cap 11 includes an end cap 11 body and a protruding portion 113 disposed around the end cap 11 body. As shown in the drawing, the cross-sectional shape of the end cap body and the protruding portion may be T-shaped. The shape of the end cap 11 body and the shape of the protruding portion 113 are diversified. For example, the projection of the end cap 11 body in the first direction X is in a circular shape, and the projection of the protruding portion 113 in the first direction X is in a circular ring shape. Alternatively, the projection of the end cap 11 body in the first direction X is in a square shape, and the projection of the protruding portion 113 in the first direction X is in a square ring shape.

The end cap 11 body is disposed corresponding to the opening K. In other words, the projection of the end cap 11 body in the first direction X falls inside the projection of the opening K in the first direction X. The protruding portion 113 is located on one side of the housing 12 along the first direction X. In other words, the projection of the protruding portion 113 in the first direction X at least partially falls outside the projection of the opening K in the first direction X, and the projection of the protruding portion 113 in the first direction X at least partially overlaps the projection of the housing 12 in the first direction X.

The protruding portion 113 is fixed to the housing 12 by welding. The protruding portion 113 may be fixed to the housing 12 by welding in the first direction X. Further, in order to fix the protruding portion 113 to the housing 12 by welding, the welding needs to be side welding. Specifically, a laser beam needs to be cast from the outer peripheral side of the housing 12 and strike the outer peripheral side of the housing 12 or a side of the protruding portion 113, the side being away from the end cap 11 body. Subsequently, the laser melting causes at least a part of the protruding portion 113 to fuse with the housing 12 into one piece.

On this basis, due to the impact of the side welding angle and the position of incidence, the end portion 32 of the molten pool structure 30 formed by the side welding can penetrate deep into the first plate portion 111. In this way, at least a part of the welding pores H can be located in the end portion 32, thereby reducing the risk of cracking and breakage of the second plate portion 121 and improving the reliability of the shell 10 in use.

To sum up, the technical solution provided in an embodiment of this application is applicable to different welding manners such as top welding and side welding, so as to be applicable to different types of shell 10 structures and highly flexible. On this basis, by locally adjusting the welding manner, at least a part of the welding pores H can be located inside the first plate portion 111, thereby improving the reliability of the battery cell 600.

In some embodiments, as shown in FIG. 6 and FIG. 8, the molten pool structure 30 includes a weld mark structure J exposed on an outer surface of the shell 10. The end cap 11 is accommodated in the opening K. The weld mark structure J is at least partially exposed on an upper surface of the end cap 11; and/or, a partial structure of the end cap 12 laps the housing 12 in the first direction X, and the weld mark structure J is at least partially exposed on an outer surface of the housing 12.

The weld mark structure J is a structure exposed on the outer surface of the shell 10 in the molten pool structure 30. Depending on the welding manner, the formed weld mark structure J varies to some extent. Specifically, if the housing 12 is fixed to the end cap 11 by top welding, then the weld mark structure J in the formed molten pool structure 30 is at least partially exposed on the upper surface of the end cap 11. In other words, the weld mark structure J is visible when the shell 10 is observed along the first direction X from a side of the end cap 11, the side being back from the electrode assembly 20. If the housing 12 is fixed to the end cap 11 by side welding, then the formed molten pool structure 30 is at least partially exposed on the outer surface of the housing 12. In other words, the weld mark structure J is visible when the shell 10 is observed from the outer surface of the housing 12.

In an embodiment of this application, the formed weld mark structure J varies to some extent depending on the welding manner. On this basis, by adjusting and changing the welding manner, at least a part of the welding pores H can be located in the first plate portion 111, thereby reducing the risk of cracking and breakage of the second plate portion 121, and achieving high flexibility and reliability.

According to a second aspect, an embodiment of this application provides a battery. The battery includes the battery cell 600 according to any one of the foregoing embodiments.

It is hereby noted that the battery according to this embodiment of this application achieves the beneficial effects of the battery cell 600 according to any one of the foregoing embodiments. For details, reference may be made to the above description about the beneficial effects of the battery cell 600, and the details are omitted herein.

According to a third aspect, an embodiment of this application provides an electrical device. The electrical device includes the battery cell 600 according to any one of the foregoing embodiments.

It is hereby noted that the electrical device according to this embodiment of this application achieves the beneficial effects of the battery cell 600 according to any one of the foregoing embodiments. For details, reference may be made to the above description about the beneficial effects of the battery cell 600, and the details are omitted herein.

According to a fourth aspect, referring to FIG. 10, an embodiment of this application provides a method for preparing a battery cell 600. The preparation method includes the following steps:
S100: Providing a first plate portion 111 and a second plate portion 121.

In step S100, both the first plate portion 111 and the second plate portion 121 are configured to form a shell 10. The thickness of the first plate portion 111 is greater than the thickness of the second plate portion 121. Depending on the arrangement of the first plate portion 111 and the second plate portion 121, the thickness direction of the first plate portion 111 may be parallel to the thickness direction of the second plate portion 121, or, the thickness direction of the first plate portion 111 may intersect the thickness direction of the second plate portion 121.

S110: Welding the first plate portion 111 to the second plate portion 121 by laser radiation.

In step S120, in this embodiment of this application, by adjusting the welding process, the molten pool structure 30 formed by welding can penetrate deep into the first plate portion 111, so that at least a part of the welding pores H can be located inside the first plate portion 111. Because the first plate portion 111 itself is of a specified thickness, the thickness of the first plate portion 111 itself can still protect the first plate portion against problems such as cracking or breakage under a specified amount of stress even if the welding pores H exist in the first plate portion 111. Further, because at least a part of the welding pores H can be located in the first plate portion 111, the number of welding pores H located in the second plate portion 121 is reduced, thereby reducing the impact caused by the welding pores H onto the strength of the second plate portion 121, alleviating the risk of cracking and breakage of the second plate portion 121, and improving reliability of the battery cell 600 in use.

In some embodiments, an end cap 11 includes the first plate portion 111. A housing 12 includes the second plate portion 121. An opening K is created at least at one end of the housing 12 in a first direction X. The end cap 12 is configured to fit and cover the opening K.

The end cap 11 can be fixed to the housing 12 by welding to form a shell 10. An opening K is created at least at one side of the end cap 11 in the first direction X. The end cap 11 is configured to fit and cover the opening K. The thickness of the end cap 11 is greater than the thickness of the housing 12. The end cap 11 and the housing 12 may be in diverse shapes and structures. For example, the housing 12 may assume a cylindrical structure, and the projection of the end cap 11 in the first direction X is circular; or, the housing 12 may assume a cuboidal structure, and the projection of the end cap 11 in the first direction X is square.

In these embodiments of this application, by adjusting the welding manner, the molten pool structure 30 formed by welding can penetrate deep into the end cap 11, so that at least a part of the welding pores H can be located in the end cap 11, thereby reducing the number of welding pores H in the housing 12, reducing the impact caused by the welding pores H onto the strength of the housing 12, alleviating the risk of cracking and breakage of the housing 12, and improving reliability of the battery cell 600 in use.

In some embodiments, as shown in FIG. 6 and FIG. 7, in step S110, a laser beam strikes a surface of at least one of the end cap 11 or the housing 12 in the first direction X. An incident angle of the laser beam intersects the first direction X; and/or, a position at which the laser beam strikes the surface of the end cap 11 is spaced apart from an inner surface of the housing 12.

That the laser beam strikes a surface of at least one of the end cap 11 or the housing 12 in the first direction X means that, in these embodiments of this application, the housing 12 is fixed to the end cap 11 by top welding, and the laser beam needs to be cast from a side of the end cap 11, the side being back from the electrode assembly 20; and, the laser beam needs to strike a surface of at least one of the end cap 11 or the housing 12 in the first direction X, and then, under the action of the laser, a partial structure of the end cap 11 and at least a partial structure at the recess A are fused and welded into one piece.

On this basis, in order to enable at least a part of the welding pores H to be located in the end cap 11, in these embodiments of this application, at least one of the position of incidence or the incident angle of the laser beam is adjusted in the top welding. Specifically, the incident angle of the laser beam may be controlled so that the incident beam intersects the first direction X. On this basis, the relative position between the body portion 31 and the end portion 32 of the molten pool structure 30 formed by the laser welding also intersects the first direction X, thereby causing the end portion 32 to deviate away from the housing 12. In this way, the welding pores H located in the end portion 32 can be located in the end cap 11, thereby reducing the adverse effect caused by the welding pores H onto the housing 12, and improving the reliability of the battery cell 600.

Alternatively, in some other embodiments, the position of incidence of the laser beam may be adjusted, and the position at which the laser beam strikes the surface of the end cap 11 is spaced apart from an inner surface of the housing 12. Specifically, the laser beam directly strikes a side of the end cap 11, the side being back from the electrode assembly 20. In addition, the position at which the laser beam strikes the surface of the end cap 11 is spaced apart from the inner surface of the housing 12 in a direction perpendicular to the first direction X.

This design enables a larger part of the molten pool structure 30 to be located in the end cap 11 rather than in the housing 12. In addition, the end portion 32 in the molten pool structure 30 can also penetrate deep into the end cap 11. In this way, more welding pores H can be located in the end cap 11 to reduce the adverse effect caused by the welding pores H onto the housing 12, and improve the reliability of the battery cell 600.

To sum up, in these embodiments of this application, on the basis of the top welding process, at least one of the position of incidence relative to the housing 12 and the end cap 11 or the incident angle of the laser beam used in the top welding is adjusted, so that at least a part of the welding pores H are enabled to be located in the end cap 11, thereby reducing the adverse effects caused by the welding pores H onto the housing 12, and improving the reliability of the battery cell 600.

In some embodiments, as shown in FIG. 8 and FIG. 9, in step S110, the laser beam strikes an outer surface of at least one of the housing 12 or the end cap 11 in a third direction Z. The third direction Z intersects the first direction X. The third direction Z is parallel to a thickness direction of the second plate portion 121. Optionally, the first direction X is perpendicular to the third direction Z.

The housing 12 may include a plurality of side plates connected in tandem. The plurality of side plates come together on all sides to form the opening K. On this basis, the second plate portion 121 may be one of the side plates of the housing 12 that need to be fixed to the end cap 12 by welding. Further, the thickness direction of the second plate portion 121, that is, the third direction Z, corresponds to the thickness direction of the side plate.

That the laser beam strikes an outer surface of at least one of the housing 12 or the end cap 11 in the third direction Z means that, in these embodiments of this application, the housing 12 is fixed to the end cap 11 by side welding, and the laser beam needs to be cast from the outer peripheral side of the housing 12 and strike the outer peripheral surface of the housing 12 or strike the outer peripheral surface of the end cap 11 in the third direction Z. Subsequently, the laser melting causes at least a part of the end cap 11 to fuse with the housing 12 into one piece.

In these embodiments of this application, by means of side welding, the end portion 32 in the molten pool structure 30 formed by welding can extend into the end cap 11, so that the welding pores H in the end portion 32 can be located in the end cap 11, thereby reducing the impact caused by the welding pores H onto housing 12, and improving the structural reliability of the battery cell 600.

It is hereby noted that in these embodiments of this application, the incident direction of the laser beam may be parallel to the third direction Z, or the incident direction of the laser beam may intersect the third direction Z. In addition, the end portion 32 of the molten pool structure 30 is located on one side of the body portion 31 along the second direction Y. Depending on the incident angle of the laser beam, the second direction Y may be parallel to the third direction Z, or the second direction Y may intersect the third direction Z. As an example, when the laser beam strikes the outer surface of at least one of the end cap 11 or the housing 12 along the third direction Z, the second direction Y may be parallel to the third direction Z. Further, optionally, the first direction X, the second direction Y, and the third direction Z may be located on the same plane.

In some embodiments, as shown in FIG. 8, a thickness of the second plate portion 121 is T, a dimension of the molten pool structure 30 in the first direction X is H, and an angle between the laser radiation direction and the first direction X is β, and β satisfies: 90° - arcsin (T/H) ≤ β ≤ 90° + arcsin (T/H).

The second plate portion 121 is at least a partial structure configured to be fixed to the end cap 11 by welding in the housing 12. The "thickness of the second plate portion 121" mentioned in these embodiments of this application means a maximum thickness of the second plate portion 121. The thicknesses of the second plate portion 121 at different positions may keep identical, or the thicknesses of the second plate portion 121 at different positions may vary.

Further, in these embodiments of this application, regardless of whether the welding manner is top welding, side welding, or the like, in order to enable the end portion 32 in the molten pool structure 30 to penetrate deep into the end cap 11, the laser radiation direction needs to be limited. By making the laser radiation direction intersect the first direction X, and by setting the angle β between the laser radiation direction and the first direction to be not less than 90° - arcsin(T/H), this application reduces the risk of cracking and breakage caused by excessive welding pores H in the housing 12 because an excessive part of the molten pool structure 30 is located in the housing 12. Further, in these embodiments of this application, the angle β is set to be not greater than 90° - arcsin(T/H), so as to reduce the risk of the molten pool structure 30 penetrating deep into a central position on the end cap 11, reduce the adverse effects caused by the molten pool structure 30 onto the end cap 11, and improve the reliability of the battery cell 600.

In some embodiments, β satisfies: 7° ≤ β ≤ 173°. Optionally, β is one of 7°, 45°, 90°, 150°, or 173°.

In these embodiments of this application, the angle β is set to be not less than 7°, thereby reducing the risk of cracking and breakage caused by excessive welding pores H in the housing 12 because an excessive part of the molten pool structure 30 is located in the housing 12. Further, in these embodiments of this application, the angle β is set to be not greater than 173°, so as to reduce the risk of the molten pool structure 30 penetrating deep into a central position on the end cap 11, reduce the adverse effects caused by the molten pool structure 30 onto the end cap 11, and improve the reliability of the battery cell 600.

According to some embodiments of this application, referring to FIG. 4 to FIG. 9, the battery cell 600 includes a shell 10 and an electrode assembly 20. The shell 10 includes a housing 12 and an end cap 11. An opening K is created at least at one end of the housing 12 in a first direction X. The end cap 11 is configured to fit and cover the opening K. The end cap 11 includes the first plate portion 111. The housing 12 includes the second plate portion 121. The thickness of the first plate portion 111 is greater than the thickness of the second plate portion 121. The first plate portion 111 is welded to the second plate portion 121 to form a molten pool structure 30 and welding pores H located in the molten pool structure 30. The electrode assembly 20 is accommodated in an accommodation space. At least a part of the welding pores H are located in the end cap 11.

The molten pool structure 30 includes a body portion 31 and an end portion 32 connected to the body portion 31 and penetrating deep into the first plate portion 111. At least a part of the welding pores H is located in the end portion 32. The end portion 32 is located on one side of the body portion 31 along a second direction Y. The second direction Y intersects the first direction X. The first plate portion 111 includes a center portion 1111 and an edge portion 1112 located around the center portion 1111. The edge portion 1112 is welded to the second plate portion 121. In the thickness direction of the second plate portion 121, the end portion 32 protrudes toward the center portion 1111 relative to the body portion 31.

A recess A is disposed on an inner surface of the housing 12 at a position close to the opening K. The end cap 11 is at least partially located in the recess A and fixed to a lateral side of the recess A by welding. Alternatively, the end cap 11 includes an end cap body 112 and a protruding portion 113 disposed around the end cap body 112. The end cap body 112 is disposed corresponding to the opening K. The protruding portion 113 is located on one side of the housing 12 along the first direction X and fixed to the housing 12 by welding.

The molten pool structure 30 includes a weld mark structure J exposed on an outer surface of the shell 10. The end cap 11 is accommodated in the opening K. The weld mark structure J is at least partially exposed on an upper surface of the end cap 11; or, a partial structure of the top cap laps the housing 12 in the first direction X, and the weld mark structure J is at least partially exposed on an outer surface of the housing 12.

Finally, it is hereby noted that the foregoing embodiments are merely intended to describe the technical solutions of this application but not to limit this application. Although this application has been described in detail with reference to the foregoing embodiments, a person of ordinary skill in the art understands that modifications may still be made to the technical solutions described in the foregoing embodiments, or equivalent replacements may still be made to some or all technical features in the technical solutions. Such modifications and equivalent replacements fall within the scope of the claims and specification hereof without making the essence of the corresponding technical solutions depart from the scope of the technical solutions of the embodiments of this application. Particularly, to the extent that no structural conflict exists, various technical features mentioned in different embodiments may be combined in any manner. This application is not limited to the specific embodiments disclosed herein, but includes all technical solutions falling within the scope of the claims.

## Claims

1. A battery cell, comprising:
a shell, wherein the shell provides an accommodation space, the shell comprises a first plate portion and a second plate portion, and the first plate portion is welded to the second plate portion to form a molten pool structure and welding pores located in the molten pool structure; and
an electrode assembly, accommodated in the accommodation space, wherein
a thickness of the first plate portion is greater than a thickness of the second plate portion, and at least a part of the welding pores are located in the first plate portion.

2. The battery cell according to claim 1, wherein the molten pool structure comprises a body portion and an end portion connected to the body portion and penetrating deep into the first plate portion, the body portion is exposed on an outer surface of the shell, and at least a part of the welding pores are located inside the end portion.

3. The battery cell according to claim 2, wherein the second plate portion comprises a first surface oriented toward the electrode assembly, and, in a thickness direction of the second plate portion, a minimum distance between the welding pores located inside the end portion and the first surface is L1, and L1 satisfies: 0.1 mm ≤ L1 ≤ 5 mm.

4. The battery cell according to claim 3, wherein the end portion and the second plate portion are spaced apart in the thickness direction of the second plate portion.

5. The battery cell according to claim 4, wherein the first plate portion is located on one side of the electrode assembly along a first direction, the end portion is located on one side of the body portion along a second direction, and the second direction intersects the first direction.

6. The battery cell according to claim 5, wherein the first plate portion comprises a center portion and an edge portion located around the center portion, and the edge portion is welded to the second plate portion to form the molten pool structure; and
in the thickness direction of the second plate portion, the end portion protrudes toward the center portion relative to the body portion.

7. The battery cell according to any one of claims 1 to 6, wherein the shell comprises a housing and an end cap, an opening is created at least at one end of the housing in a first direction, the end cap is configured to fit and cover the opening, the end cap comprises the first plate portion, and the housing comprises the second plate portion.

8. The battery cell according to claim 7, wherein a recess is disposed on an inner surface of the housing at a position close to the opening, and the end cap is at least partially located in the recess and fixed to a lateral side of the recess by welding; or
the end cap comprises an end cap body and a protruding portion disposed around the end cap body, the end cap body is disposed corresponding to the opening, and the protruding portion is located on one side of the housing along the first direction and fixed to the housing by welding.

9. The battery cell according to claim 7 or 8, wherein the molten pool structure comprises a weld mark structure exposed on an outer surface of the shell, the end cap is accommodated in the opening, and the weld mark structure is at least partially exposed on an upper surface of the end cap; or
a partial structure of the end cap laps the housing in the first direction, and the weld mark structure is at least partially exposed on an outer surface of the housing.

10. A battery, comprising the battery cell according to any one of claims 1 to 9.

11. An electrical device, comprising the battery cell according to any one of claims 1 to 9, wherein the battery cell is configured to provide electrical energy.

12. A method for preparing a battery cell, comprising:
providing a first plate portion and a second plate portion, wherein a thickness of the first plate portion is greater than a thickness of the second plate portion; and
welding the first plate portion to the second plate portion by laser radiation to form a molten pool structure that penetrates deep into the first plate portion, so that at least a part of the welding pores are located in the first plate portion.

13. The preparation method according to claim 12, wherein an end cap comprises the first plate portion, a housing comprises the second plate portion, an opening is created at least at one end of the housing in a first direction, and the end cap is configured to fit and cover the opening.

14. The preparation method according to claim 13, wherein, in welding the first plate portion to the second plate portion by laser radiation, a laser beam strikes a surface of at least one of the end cap or the housing in the first direction; and
an incident angle of the laser beam intersects the first direction; and/or
a position at which the laser beam strikes the surface of the end cap is spaced apart from an inner surface of the housing.

15. The preparation method according to claim 14, wherein, in welding the first plate portion to the second plate portion by laser radiation, a laser beam strikes an outer surface of at least one of the housing or the end cap in a third direction, the third direction intersects the first direction, and the third direction is parallel to a thickness direction of the second plate portion.

16. The preparation method according to claim 14 or 15, wherein a thickness of the second plate portion is T, a dimension of the molten pool structure in the first direction is H, and an angle between a laser radiation direction and the first direction is β, and β satisfies: 90° - arcsin (T/H) ≤ β ≤ 90° + arcsin (T/H).

17. The preparation method according to claim 16, wherein β satisfies: 7° ≤ β ≤ 173°.
